# EUROPEAN PATENT APPLICATION

(11) **EP 3 543 299 A1**
(43) Date of publication of application: **25.09.2019**
(21) Application number: 17871385.5
(22) Date of filing: 07.11.2017
(51) Int. Cl.: C09D 11/40, B41J 2/01, B41M 5/00, C09D 11/322

(54) **INK-JET INK SET, METHOD FOR PRODUCING PRINTED MATTER, AND PRINTED MATTER**

(30) Priority: 16.11.2016 JP 2016223500
(71) Applicant: Seiren Co., Ltd., Fukui-shi Fukui 918-8560 (JP)
(72) Inventor: KAWAMURA, Akihiro, Fukui-shi Fukui 918-8560 (JP)
(74) Representative: Zardi, Marco
(86) International application number: PCT/JP2017/040139
(87) International publication number: WO 2018/092641

(57) **Abstract**

Provided is an ink-jet ink set, including: a pigment; a binder resin; a dispersant; and a solvent, wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.

## Description

### TECHNICAL FIELD

The present invention relates to an ink-jet ink set, a method for producing a printed matter, and a printed matter. More specifically, the present invention relates to an ink-jet ink set, which includes a specified yellow colorant so as to be excellent in heat resistance and is capable of obtaining a printed matter being excellent in weather resistance. Moreover, the present invention relates to a printed matter on which an ink-jet image being excellent in heat resistance and excellent weather resistance is formed, and to a method for producing the printed matter.

### BACKGROUND ART

In recent years, various kinds of an ink-jet ink set including an ink-jet ink for producing a printed matter being excellent in weather resistance have been developed. For example, in Patent Document 1, there is disclosed an ultraviolet-curable yellow ink using hydrous iron oxide such as Fe₂O₃/H₂O as a yellow pigment. Similarly, in Patent Document 2, there is disclosed an ultraviolet-curable ink-jet ink using an inorganic pigment.

In a case of forming an image by an ink-jet method, an ink is sometimes blended with a solvent having a high boiling point in order to prevent a nozzle from being dried.

### PRIOR ART DOCUMENT

### Patent Document

Patent Document 1: JP 2009-149719 A
Patent Document 2: JP 2008-81594 A

### SUMMARY OF THE INVENTION

Both of the inks disclosed in Patent Document 1 and Patent Document 2 are ultraviolet-curable ink-jet inks, and are cured through irradiation of ultraviolet rays after formation of an image by the ink-jet method. Meanwhile, unlike the ultraviolet-curable inks, a water-based or solvent-based ink is dried at a high temperature after formation of an image. On this occasion, in order to remove the above-mentioned solvent having a high boiling point, the ink is exposed to a high temperature of, for example, from about 150°C to about 400°C. In this case, depending on a kind of the pigment included in the ink, there arises a problem in that an obtained image is changed in color at the time of drying. Among pigments, a yellow colorant is liable to be reddish due to the change in color.

Both of the inks described in Patent Document 1 and Patent Document 2 are ultraviolet-curable inks. Therefore, such drying at a high temperature is not considered, and there is room for improvement in heat resistance.

The present invention has been made to solve such problem, and has an object to provide an ink-jet ink set, which includes a specified yellow colorant so as to obtain a printed matter being excellent in weather resistance and is also excellent in heat resistance. Moreover, the present invention has an object to provide a printed matter on which an ink-jet image being excellent in heat resistance and weather resistance is formed, and to provide a method for producing the printed matter.

According to one embodiment of the present invention for solving the problem described above, provided is an ink-jet ink set, including: a pigment; a binder resin; a dispersant; and a solvent, wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.

Moreover, according to one embodiment of the present invention for solving the problem described above, provided is a method for producing a printed matter, including: a printing step of applying the ink-jet ink set described above to a base material by an ink-jet method; and a drying step of drying the base material.

Further, according to one embodiment of the present invention for solving the problem described above, provided is a printed matter, including: a base material; and a print layer formed on the base material, wherein the print layer includes a pigment, a binder resin, and a dispersant, and wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.

### EMBODIMENT FOR CARRYING OUT THE INVENTION

### <Ink-jet Ink Set>

According to one embodiment of the present invention, an ink-jet ink set (hereinafter also referred to as "ink set") includes a pigment, a binder resin, a dispersant, and a solvent. The pigment includes a yellow colorant. The yellow colorant includes at least any one selected from the group consisting of C.I. Pigment Brown 24, metal-coated C.I. Pigment Yellow 42, and C.I. Pigment Yellows 48, 53, 119, 161, and 189. Now, description is made of each of the elements. In the present embodiment, it is only required that the pigment include a yellow colorant including a specified pigment, and blending of other colorant and kinds of the colorant are not particularly limited. Therefore, examples of the ink set in the present embodiment are included in the ink set of the present invention even when only the yellow colorant is included as the pigment (that is, only a yellow ink is included and inks of other colors are not included).

### (Pigment)

### • Yellow Colorant

The yellow colorant includes at least any one selected from the group consisting of C.I. Pigment Brown 24, metal-coated C.I. Pigment Yellow 42, and C.I. Pigment Yellows 48, 53, 119, 161, and 189. The yellow colorant including those pigments is excellent in heat resistance, and is less liable to be changed in color even in a case of forming an image by the ink-jet method and thereafter drying at a high temperature. Therefore, a desired color is likely to be reproduced on an obtained printed matter. Moreover, the printed matter obtained through use of the yellow colorant including those pigments is excellent in weather resistance.

The yellow colorants other than C.I. Pigment Yellow 42 may be metal-coated, similarly to C.I. Pigment Yellow 42. In the present embodiment, it is only required that a kind of metal to be used for the metal coating is metal which may give heat resistance to the yellow colorant, and the kind of metal is not particularly limited. Moreover, examples of the metal to be used in the present embodiment may include a metal simple substance, metal oxide, a metal complex, a complex of metal and metal compounds, and metal alloy. Examples of the metal simple substances include simple substances of gold, silver, copper, aluminum, platinum, lead, indium, palladium, rhodium, ruthenium, iridium, osmium, tungsten, nickel, tantalum, bismuth, tin, zinc, titanium, cobalt, and iron. Examples of the metal oxide include indium tin oxide, indium zinc oxide, antimony tin oxide, zinc tin oxide, titania, niobium trioxide, alumina, zinc oxide, zirconia, and cerium oxide. Among those, it is preferred that the metal be alumina because the alumina is easy to obtain, is easy to handle, and is likely to attain an effect of improving the heat resistance.

An extent of metal coating (for example, coating area and coating amount) is suitably adjusted in accordance with, for example, the heat resistance to be given. For example, with regard to the coating area, it is only required that the metal coating be applied to at least a part of a surface of the yellow colorant, and it is preferred that the metal coating be applied to the entirety of the surface. Moreover, with regard to the coating amount, the metal coating may be applied to the yellow colorant with the amount of from 0.1 mass% to 20.0 mass% by conversion in terms of metal (for example, aluminum). It is only required that the metal coating be applied to at least a part of a surface of the yellow colorant, and it is preferred that the metal coating be applied to the entirety of the surface.

A method of applying the metal coating to the surface of the yellow colorant is not particularly limited. For example, the metal coating may be performed by the following method. First, pH of suspension including the yellow colorant is adjusted to be equal to or more than 10 and equal to or less than 4. Next, metal compounds (for example, aluminum compounds) are added and stirred. After that, the pH is adjusted to fall within a range of from 5 to 9.

Moreover, the pigment may include, as a yellow colorant, a pigment other than those described above to an extent that the heat resistance of the ink set and the weather resistance of the obtained printed matter are not degraded. As such yellow colorants, examples of an organic pigment include C.I. Pigment Yellows 74, 128, 138, 150, 151, 154, 155, and 213, and examples of an inorganic pigment include C.I. Pigment Yellows 42 and 184.

It is preferred that, among the yellow colorants, at least any one selected from the group consisting of C.I. Pigment Brown 24, metal-coated C.I. Pigment Yellow 42, C.I. Pigment Yellows 48, 53, 119, 161, and 189 be blended in the ink by the amount of equal to or more than 0.1 mass%, more preferably equal to or more than 2 mass%.

### • Colorant other than Yellow Colorant

The pigment may include colorants of various pigments as colorants other than yellow. Examples of such pigment include various inorganic pigments or organic pigments. Examples of the inorganic pigment include oxide, complex oxide, hydroxide, sulfide, ferrocyanide, chromate, carbonate, silicate, phosphate, carbon (carbon black), and metal powder. Examples of the organic pigment include nitroso, dyeing lake, azo lake, insoluble azo, monoazo, disazo, condensed azo, benzimidazolone, phthalocyanine, anthraquinone, perylene, quinacridone, dioxazine, isoindolin, azomethine, and pyrrolopyrrole. Those pigments may be used in combination. Moreover, those pigments may suitably be subjected to the metal coating similar to that described above.

More specifically, the pigment may include, as a red colorant, at least any one selected from the group consisting of C.I. Pigment Reds 101, 232, 233, 235, and 236. Among those, in view of excellence in heat resistance and color representation, it is preferred that the pigment include, as the red colorant, at least any one selected from the group consisting of C.I. Pigment Reds 101 and 232.

It is preferred that, among the red colorants, at least any one selected from the group consisting of C.I. Pigment Reds 101 and 232 be blended in the ink by the amount of equal to or more than 0.5 mass%, more preferably equal to or more than 2 mass%.

Moreover, the pigment may include, as a blue colorant, at least any one selected from the group consisting of C.I. Pigment Blues 28, 36, 36:1, 72, 73, and 74. Among those, in view of excellence in heat resistance and color representation, it is preferred that the pigment include, as the blue colorant, at least any one selected from the group consisting of C.I. Pigment Blues 28 and 36.

It is preferred that, among the blue colorants, at least any one selected from the group consisting of C.I. Pigment Blues 28 and 36 be blended in the ink by the amount of equal to or more than 0.5 mass%, more preferably equal to or more than 2 mass%.

Further, in view of excellence in heat resistance, the pigment may include, as a black colorant, at least any one selected from the group consisting of C.I. Pigment Blacks 7, 11, 26, 27, 28, 29, and 31. Among those, in view of excellence in heat resistance and color representation, it is preferred that the pigment include, as the black colorant, at least any one selected from the group consisting of C.I. Pigment Blacks 7, 26, 27, 28, and 29.

It is preferred that, among the black colorants, at least any one selected from the group consisting of C.I. Pigment Blacks 7, 26, 27, 28, and 29 be blended in the ink by the amount of equal to or more than 0.5 mass%, more preferably equal to or more than 2 mass%.

When the red colorant including at least any one selected from the group consisting of C.I. Pigment Reds 101 and 232, the blue colorant including at least any one selected from the group consisting of C.I. Pigment Blues 28 and 36, and the black colorant including at least any one selected from the group consisting of C.I. Pigment Blacks 7, 26, 27, 28, and 29 as other colorants, the obtained ink set is excellent in heat resistance not only with regard to the yellow colorant but also the red colorant, the blue colorant, and the black colorant. Therefore, the obtained printed matter is less liable to be changed in color not only with regard to the yellow-based color but also with regard to other colors, and hence a desired color is likely to be reproduced. Moreover, the printed matter formed through use of such ink set is more excellent in weather resistance.

It is preferred that the pigment to be used for each ink of the ink set according to the present embodiment have an average particle diameter of equal to or more than 110 nm, more preferably equal to or more than 150 nm, still more preferably equal to or more than 200 nm. Moreover, it is preferred that the pigment have an average particle diameter of equal to or less than 400 nm, more preferably equal to or less than 300 nm. When an average particle diameter of the pigment is less than 110 nm, the pigment is liable to be changed in color due to exposure to a high temperature at the time of drying. Meanwhile, when an average particle diameter of the pigment is more than 400 nm, ejection stability of the ink at the time of ink-jet printing is liable to be degraded. In the present embodiment, the average particle diameter is measured by a dynamic light scattering method through use of Zetasizer Nano series manufactured by Malvern Instruments.

In the present embodiment, when colorants other than the yellow colorant are included, average particle diameters of the pigments of respective colorants may be substantially the same or may be different. That is, as described above, the yellow colorant is liable to be changed in color due to exposure to a high temperature. Therefore, with regard to the ink set, it is preferred that at least the average particle diameter of the pigment forming the yellow colorant be adjusted so as to fall within the range described above. Moreover, it is more preferred that, in addition to the pigment forming the yellow colorant, the average particle diameter of the pigments forming some colorants (for example, red colorant) other than the yellow colorant be adjusted so as to fall within the range described above.

Contents of the pigments in the corresponding inks constituting the ink set are not particularly limited. For example, it is preferred that the content of the pigment in corresponding one of the inks (for example, yellow ink) constituting the ink set be equal to or more than 0.5 mass%, more preferably equal to or more than 2 mass%. Moreover, it is preferred that the content of the pigment in the ink be equal to or less than 30 mass%, more preferably equal to or less than 20 mass%. When the content of the pigment is less than 0.5 mass%, sufficient coloring is less likely to be applied. Meanwhile, when the content of the pigment is more than 30 mass%, viscosity of the ink increases, and hence the ejection stability at the time of ink-jet printing is liable to be degraded.

### (Binder Resin)

The binder resin is contained, for example, to adjust the viscosity of the ink, adjust the hardness of the obtained printed matter, and control the shape thereof.

A kind of the binder resin is not particularly limited. Examples of the binder resin include epoxy resin, diallylphthalate resin, silicone resin, phenol resin, unsaturated polyester resin, polyimide resin, polyurethane resin, melamine resin, urea resin, ionomer resin, ethylene ethyl acrylonitrile resin, acrylonitrile acrylate styrene copolymer resin, acrylonitrile styrene resin, acrylonitrile polyethylene chloride styrene copolymer resin, ethylene-vinyl acetate resin, ethylene-vinyl alcohol copolymer resin, acrylonitrile butadiene styrene copolymer resin, vinyl chloride resin, chlorinated polyethylene resin, polychlorinated vinylidene resin, cellulose acetate resin, fluororesin, polyoxymethylene resin, polyamide resin, polyarylate resin, thermoplastic polyurethane elastomer, polyetheretherketone resin, polyethersulfone resin, polyethylene, polypropylene, polycarbonate resin, polystyrene, polystyrene maleic acid copolymer resin, polystyrene acrylic acid copolymer resin, polyphenylene ether resin, polyphenylene sulfide resin, polybutadiene resin, polybutylene terephthalate resin, acrylic resin, methacrylic resin, methyl pentene resin, polylactic acid, polybutylene succinate resin, butyral resin, formal resin, polyvinyl alcohol, polyvinylpyrrolidone, ethyl cellulose, carboxymethyl cellulose, gelatine, and copolymer resin thereof. The binder resin is suitably selected in consideration of film strength, viscosity, remainder viscosity of the ink-jet ink, dispersion stability of the pigment, thermal stability, non-colorability, water resistance, and chemical resistance. The binder resins may be used in combination.

Among those, in view of excellence in heat resistance and weather resistance, it is preferred that the binder resin be fluororesin, acrylic resin, vinyl chloride resin, or silicone resin. In view of excellence in heat resistance of the ink and excellence in weather resistance of the obtained printed matter, it is preferred that the binder resin be fluororesin.

### • Fluororesin

The fluororesin is not particularly limited. For example, it is preferred that the fluororesin be a copolymer including a fluorine-containing monomer and a vinyl monomer. Moreover, it is more preferred that the fluororesin be a copolymer with a vinyl ether monomer among the vinyl monomers. Further, it is more preferred that the fluororesin be a copolymer including fluoroethylene and a vinyl ether monomer, which is described later.

Examples of the fluorine-containing monomer include tetrafluoroethylene, chlorotrifluoroethylene, trichlorofluoroethylene, hexafluoropropylene, vinylidene fluoride, vinyl fluoride, and trifluoromethyltrifluoroethylene. Among those, in view of the point that a printed matter which is excellent in weather resistance can be obtained with the ink including the fluororesin formed of a copolymer with the vinyl monomer described later, it is preferred that the fluorine-containing monomer be fluoroethylene, more preferably tetrafluoroethylene or chlorotrifluoroethylene.

Examples of the vinyl monomer include a nonionic monoethylene unsaturated monomer and a bifunctional vinyl monomer. Examples of the nonionic monoethylene unsaturated monomer include styrene, vinyl toluene, ethylene, vinyl acetate, vinyl chloride, vinylidene chloride, acrylonitrile, (meth)acrylamide, and (meth)acrylic acid ester. Examples of the (meth)acrylic acid ester include methyl acrylate, methyl methacrylate, ethyl (meth)acrylate, butyl (meth)acrylate, 2-hydroxyethyl methacrylate, 2-ethylhexyl (meth) acrylate, benzyl (meth)acrylate, lauryl (meth)acrylate, oleyl (meth)acrylate, palmityl (meth) acrylate, and stearyl (meth)acrylate. Examples of the bifunctional vinyl monomer include divinyl benzene, allyl methacrylate, ethylene glycol dimethacrylate, 1,3-butane-diol dimethacrylate, diethylene glycol dimethacrylate, and trimethylolpropane trimethacrylate.

Examples of the vinyl ether include: divinyl ether compounds or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, and trimethylol propane trivinyl ether; and monovinyl ether compounds such as ethylvinyl ether, n-butylvinyl ether, isobutylvinyl ether, octadecyl vinyl ether, cyclohexylvinyl ether, hydroxybutylvinyl ether, 2-ethylhexyl vinyl ether, cyclohexane dimethanol monovinyl ether, n-propyl vinyl ether , ispropyl vinyl ether, isopropenyl ether-o-propylene carbonate, dodecyl vinyl ether, diethylene glycol monovinyl ether, and octadecyl vinyl ether.

A copolymerization ratio of the fluorine-containing monomer and the vinyl monomer is not particularly limited. For example, the copolymerization ratio is fluorine-containing monomer: vinyl monomer =3 to 1:1 to 2 (weight ratio). When the copolymerization ratio falls within such range, the printed matter which can be obtained through use of the ink set including such fluororesin is likely to be excellent in weather resistance. A polymerization method is not particularly limited. Examples of the polymerization method include solution polymerization, suspension polymerization, bulk polymerization, and emulsion polymerization.

The obtained fluororesin may be any one of an alternating copolymer, a block copolymer, a random copolymer, and a graft copolymer. Among those, it is preferred that the fluororesin be an alternating copolymer including fluoroethylene and a vinyl monomer. With the ink set including the ink that includes such fluororesin, a printed matter which is more excellent in weather resistance is likely to be obtained. Therefore, through use of such ink set, the obtained printed matter may maintain the desired color for a longer period of time. In the present embodiment, the "alternating copolymer" corresponds to a copolymer in which the number of bonds between the fluoroethylene units and the vinyl monomer units is significantly more than the bonds between the fluoroethylene units and the fluoroethylene units and the bonds between the vinyl monomer units and the vinyl monomer units. Specifically, it is preferred that the alternating copolymer in the present embodiment include the bonds between the fluoroethylene unit and the vinyl monomer units by 90 mol% to 100 mol%. In the present embodiment, the alternating copolymer may include a small number of random bond portions or block bond portions. Moreover, the bonds described above may be distinguished, for example, through ¹H NMR measurement and ²⁹Si NMR measurement. Moreover, as an analysis method for the alternating copolymer characteristics, for example, Journal of Applied Polymer Science, Vol. 106, 1007-1013 (2007) may be referred.

A weight-average molecular weight (Mw) of the fluororesin is not particularly limited. For example, it is preferred that the Mw be equal to or more than 5,000, more preferably equal to or more than 8,000. It is preferred that the Mw be equal to or less than 50,000, more preferably equal to or less than 40,000. When the Mw falls within the range described above, the fluororesin is likely to be dissolved in a solvent. Moreover, the obtained ink is improved in drying characteristics, and the ejection stability at the time of ink-jet printing is excellent. When the Mw is less than 5,000, the obtained printed matter is liable to cause stickiness, and is liable to be degraded in blocking prevention characteristics. Meanwhile, when the Mw is more than 50,000, the fluororesin is liable to be degraded in solubility, and the ejection stability of the ink at the time of ink-jet printing is liable to be degraded. In this specification, the Mw and a number-average molecular weight (Mn), which is to be described later, are values measured by GPC (gel permeation chromatography), and may be measured through use of a high-speed GPC device (HLC-8120GPC, manufactured by TOSOH CORPORATION).

### • Acrylic Resin

The acrylic resin is not particularly limited. Examples of the acrylic resin include polymers of acrylic acid ester (acrylate) or methacrylic acid ester (methacrylate). More specifically, examples of the acrylic resin include polymers including: acrylic acid alkyl ester such as methyl acrylate, ethyl acrylate, propyl acrylate, butyl acrylate, isobutyl acrylate, and 2-ethylhexyl acrylate; methacrylic acid alkyl ester such as methyl methacrylate, ethyl methacrylate, propyl methacrylate, butyl methacrylate, isobutyl methacrylate, and 2-ethylhexyl methacrylate; hydroxy group-containing acrylic acid ester such as 2-hydroxyethyl acrylate, 2-hydroxypropyl acrylate, and 2-hydroxybutyl acrylate; and hydroxy group-containing methacrylic acid ester such as 2-hydroxyethyl methacrylate, 2-hydroxypropyl methacrylate, and 4-hydroxybutyl methacrylate. Those may be used in combination.

The weight-average molecular weight (Mw) of the acrylic resin is not particularly limited. For example, it is preferred that the Mw be equal to or more than 5,000, more preferably equal to or more than 10,000. It is preferred that the Mw be equal to or less than 100,000, more preferably equal to or less than 50,000. When the Mw falls within the range described above, the ink including such acrylic resin is excellent in ejection stability at the time of ink-jet printing.

### • Vinyl Chloride Resin

The vinyl chloride resin is not particularly limited. Examples of the vinyl chloride resin include a copolymer including vinyl chloride and other monomer such as vinyl acetate, vinylidene chloride, acrylic acid, maleic acid, or vinyl alcohol. Among those, it is preferred that the vinyl chloride resin be a copolymer including a constituting unit originating from the vinyl chloride and the vinyl acetate (vinyl acetate copolymer).

The vinyl acetate copolymer can be obtained, for example, by suspension polymerization. It is preferred that the vinyl acetate copolymer contain the vinyl chloride unit by 70 mass% to 90 mass%. Within the range described above, the vinyl acetate copolymer is stably dissolved in the ink, and thus is excellent in long-term preservation stability. Moreover, the obtained ink is excellent in ejection stability.

The vinyl acetate copolymer may include other constituting units in addition to the vinyl chloride unit and the vinyl acetate unit, as needed. Examples of other constituting units include a carboxylic acid unit, a vinyl alcohol unit, and a hydroxyalkyl acrylate unit. Among those, it is preferred that other constituting unit be the vinyl alcohol unit.

The number-average molecular weight (Mn) of the vinyl chloride resin is not particularly limited. For example, it is preferred that the Mn of the vinyl chloride resin be equal to or more than 10,000, more preferably equal to or more than 12,000. Moreover, it is preferred that the Mn be equal to or less than 50,000, more preferably equal to or less than 42,000. The Mn can be measured by the GPC, and can be determined as a relative value by conversion in terms of polystyrene.

### • Silicone Resin

The silicone resin is not particularly limited. Examples of the silicone resin include methyl-based straight silicone resin (polydimethyl siloxane), methylphenyl-based straight silicone resin (polydimethyl siloxane in which part of a methyl group is substituted with a phenyl group), acrylic resin-modified silicone resin, polyester resin-modified silicone resin, epoxy resin-modified silicone resin, alkyd resin-modified silicone resin, and rubber-based silicone resin. Those may be used in combination. Among those, it is preferred that the silicone resin be the methyl-based straight silicone resin, methylphenyl-based straight silicone resin, or the acrylic resin-modified silicone resin.

The silicone resin may be obtained by being dissolved in, for example, an organic solvent. Examples of the organic solvent include xylene and toluene.

The number-average molecular weight (Mn) of the silicone resin is not particularly limited. For example, it is preferred that the Mn of the silicone resin be equal to or more than 10,000, more preferably equal to or more than 20,000. Moreover, it is preferred that the Mn be equal to or less than 5,000,000, more preferably equal to or less than 3,000,000. The Mn can be measured by the GPC, and can be determined as a relative value by conversion in terms of polystyrene.

Now returning to the overall description of the binder resin, the content of the binder resin is not particularly limited. For example, it is preferred that the content of the binder resin in the ink constituting the ink set by conversion in terms of solid content be equal to or more than 1 mass%, more preferably equal to or more than 3 mass%, still more preferably equal to or more than 5 mass%. Moreover, it is preferred that the content of the binder resin in the ink be equal to or less than 40 mass%, more preferably equal to or less than 30 mass%, still more preferably equal to or less than 25 mass%. When the content of the binder resin is less than 1 mass%, desired performance as a binder is less likely to be obtained, and adhesion to the base material is liable to be degraded. Meanwhile, when the content of the binder resin is more than 40 mass%, the viscosity of the ink increases, and the ejection stability at the time of ink-jet printing is liable to be degraded.

When the fluororesin is included as the binder resin, the content of the fluororesin is not particularly limited. For example, it is preferred that the content of the fluororesin in the ink constituting the ink set by conversion in terms of solid content be equal to or more than 2 mass%, more preferably equal to or more than 5 mass%. Moreover, it is preferred that the content of the fluororesin in the ink be equal to or less than 40 mass%, more preferably equal to or less than 30 mass%. When the content of the fluororesin is equal to or more than 2 mass%, the ejection stability at the time of ink-jet printing is likely to be excellent. Meanwhile, when the content of the fluororesin is more than 40 mass%, the viscosity of the ink constituting the ink set increases, and the ejection stability at the time of ink-jet printing is liable to be degraded.

### (Dispersant)

The dispersant is contained for dispersion of the pigment. The dispersant is not particularly limited. Examples of the dispersant include an anionic surfactant, a nonionic surfactant, and a polymeric dispersant. Those may be used in combination.

Examples of the anionic surfactant include fatty acid salt, alkyl sulfuric acid ester salt, alkyl benzene sulfonate, alkyl naphthalane sulfonate, lignin sulfonate, dialkyl sulfosuccinic acid salt, alkyl sulfonic acid ester salt, naphthalane sulfonic acid formalin condensate, polyoxyethylene alkyl sulfuric acid ester salt, and substituted derivatives thereof.

Examples of the nonionic surfactant include polyoxyethylene alkyl ether, polyoxyethylene alkyl phenylether, polyoxyethylene fatty acid ester, sorbitan fatty acid ester, polyoxyethylene sorbitan fatty acid ester, polyoxyethylene alkyl amine, glycerine fatty acid ester, oxyethylene oxypropylene block polymer, and substituted derivatives thereof.

In view of obtaining more stable dispersion characteristics, it is preferred that the polymeric dispersant have both an acid value and a base value, and that the acid value is more than the base value. Examples of the polymeric dispersant include PB series manufactured by Ajinomoto Fine-Techno Co., Inc., Hinoacto series manufactured by Kawaken Fine Chemicals Co., Ltd., Solsperse series manufactured by Lubrizol Japan Limited, DISPARLON series manufactured by Kusumoto Chemicals, Ltd., and Efka (registered trademark) series manufactured by BASF Japan.

Among those, it is preferred that the dispersant of the present embodiment be the dispersant having the base value of equal to or less than 50 mgKOH/g, more preferably equal to or less than 40 mgKOH/g. When the base value of the dispersant is equal to or less than 50 mgKOH/g, the dispersant is less liable to be changed in color even in a case of forming an image by the ink-jet method and thereafter drying at a high temperature. Therefore, a desired color is more likely to be reproduced on the obtained printed matter. Moreover, the printed matter formed through use of such ink set is more excellent in weather resistance. In the present embodiment, the base value is represented by milligrams (mg) of the amount of potassium hydroxide corresponding to the amount of hydrochloric acid or perchloric acid required for neutralizing basic components contained in 1 g of a sample, and can be calculated by potentiometric titration defined in JIS K 2501.

The content of the dispersant is suitably determined based on a kind of a pigment to be dispersed and a content thereof. For example, it is preferred that the content of the dispersant, with respect to the pigment being 100 parts by mass, be equal to or more than 5 parts by mass, more preferably equal to or more than 10 parts by mass. Moreover, the content of the dispersant, with respect to the pigment being 100 parts by mass, be equal to or less than 150 parts by mass, more preferably equal to or less than 80 parts by mass. When the content of the dispersant is less than 5 parts by mass, the pigment is less likely to be dispersed. Meanwhile, when the content of the dispersant is more than 150 parts by mass, a raw material cost is increased, or dispersion of the pigment is liable to be hindered.

### (Solvent)

The solvent is a liquid component for dissolving the binder resin in the ink constituting the ink set. A kind of the solvent is not particularly limited. Examples of the solvent include water, a glycol ether-based solvent, an acetate-based solvent, an alcohol-based solvent, a ketone-based solvent, an ester-based solvent, a hydrocarbon-based solvent, a fatty acid ester-based solvent, and an aromatic solvent. Those may be used in combination. Among those, it is preferred that the solvent of the present embodiment include at least any one of the glycol ether-based solvent and the acetate-based solvent. The glycol ether-based solvent and the acetate -based solvent have a low viscosity and a relatively high boiling point. Therefore, the ink including those as the solvent is more improved in drying characteristics, and is more excellent in ejection stability at the time of ink-jet printing.

Examples of the glycol ether-based solvent include ethylene glycol monomethyl ether, ethylene glycol monoethyl ether, ethylene glycol mono(iso)propyl ether, ethylene glycol monobutyl ether, diethylene glycol monoethyl ether, diethylene glycol mono-n-butyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, triethylene glycol monomethyl ether, triethylene glycol monoethyl ether, triethylene glycol mono-n-propyl ether, triethylene glycol mono-n-butyl ether, tripropylene glycol monoethyl ether, tripropylene glycol mono-n-propyl ether, tripropylene glycol mono-n-butyl ether, diethylene glycol dimethyl ether, triethylene glycol dimethyl ether, tetraethylene glycol dimethyl ether, polyethylene glycol dimethyl ether, diethylene glycol diethylether, diethylene glycol dibutyl ether, diethylene glycol ethylmethyl ether, diethylene glycol isopropyl methyl ether, diethylene glycol butylmethyl ether, triethylene glycol butylmethyl ether, dipropylene glycol dimethyl ether, and tripropylene glycol dimethyl ether.

Examples of the acetate-based solvent include: alkylene glycol monoalkyl ether acetate such as ethylene glycol monomethyl ether acetate, ethylene glycol monoethyl ether acetate, ethylene glycol monopropyl ether acetate, ethylene glycol monoisopropyl ether acetate, ethylene glycol mono-n-butylether acetate, ethylene glycol mono-sec-butylether acetate, ethylene glycol monoisobutyl ether acetate, ethylene glycol mono-tert-butyl ether acetate, propylene glycol monomethyl ether acetate, propylene glycol monoethyl ether acetate, propylene glycol monoisopropyl ether acetate, propylene glycol monopropyl ether acetate, propylene glycol mono-n-butyl ether acetate, propylene glycol mono-sec-butyl ether acetate, propylene glycol monoisobutyl ether acetate, propylene glycol mono-tert-butyl ether acetate, 3-methyl 3-metoxybutyl acetate, 3-methyl 3-etoxybutyl acetate, 3-methyl 3-propoxybutyl acetate, 3-methyl 3-isopropoxybutyl acetate, 3-methyl 3-n-butoxyethyl acetate, 3-methyl 3-isobutoxybutyl acetate, 3-methyl 3-sec-butoxybutyl acetate, and 3-methyl 3-tert-butoxybutyl acetate; ethylene glycol diacetate; diethylene glycol diacetate; triethylene glycol diacetate; propylene glycol diacetate; dipropylene glycol diacetate; and tripropylene glycol diacetate.

It is preferred that the solvent of the present embodiment have a boiling point of equal to or more than 150°C, more preferably equal to or more than 180°C. Moreover, it is preferred that the solvent have a boiling point of equal to or less than 300°C, more preferably equal to or less than 280°C. When the boiling point falls within the range described above, the obtained ink is more improved in drying characteristics, and is more excellent in ejection stability at the time of ink-jet printing. Moreover, with the ink, a clear printed matter with less blur is likely to be formed. When the solvent has a boiling point of less than 150°C, the ink is more liable to be dried in a periphery of a head nozzle, and is more liable to be degraded in ejection stability. Meanwhile, when the solvent has a boiling point of more than 300°C, the ink is less likely to be dried, and more time is liable to be taken in the drying step at the time of formation of the printed matter. Moreover, an image is more liable to be blurred in the obtained printed matter.

The content of the solvent is not particularly limited. For example, it is preferred that the content of the solvent in the ink constituting the ink set be equal to or more than 50 mass%, more preferably equal to or more than 60 mass%. Moreover, it is preferred that the content of the solvent in the ink be equal to or less than 99 mass%, more preferably equal to or less than 80 mass%. When the content of the solvent is less than 50 mass%, the viscosity of the ink becomes higher, and the ejection stability at the time of the ink-jet printing is degraded. Meanwhile, when the content of the solvent is more than 99 mass%, the ratio of the binder resin that can be added to the ink becomes smaller, and the desired performance is less likely to be obtained.

### (Optional Component)

The ink constituting the ink set of the present embodiment may include a optional component in addition to the components described above as appropriate. Examples of the optional component include a heat stabilizer, an antioxidant, an antiseptic, an antifoamer, a penetrant, a reduction inhibitor, a leveling agent, a pH conditioner, a polymerization inhibitor, an ultraviolet absorber, and a light stabilizer.

Returning to the overall description of the ink set, the viscosity of the ink constituting the ink set is not particularly limited. It is preferred that the viscosity of the ink at 30°C be equal to or more than 5 mPa • s, more preferably equal to or more than 6 mPa • s. Moreover, it is preferred that the viscosity of the ink at 30°C be equal to or less than 30 mPa • s, more preferably equal to or less than 20 mPa • s. When the viscosity falls within the range described above, the ink is excellent in ejection stability at the time of ink-jet printing. When the viscosity is less than 5 mPa • s, the ink is liable to be degraded in ejection stability at the time of the ink-jet printing. Moreover, when the viscosity is more than 30 mPa • s, the ink cannot be well ejected from the head nozzle, and the ink is liable to be degraded in ejection stability at the time of the ink-jet printing. In the present embodiment, the viscosity can be measured through use of a Brookfield viscometer (TVB-20LT, manufactured by TOKI SANGYO CO., LTD).

A method of adjusting the viscosity within the range described above is not particularly limited. For example, the viscosity may be adjusted with a dosage of the binder resin to be used or a kind or dosage of the solvent to be used. The viscosity may be adjusted through use of a viscosity conditioner such as a thickener as needed.

A surface tension of the ink constituting the ink set is not particularly limited. It is preferred that the surface tension of the ink at 25°C be equal to or more than 20 dyne/cm, more preferably equal to or more than 22 dyne/cm. Moreover, it is preferred that the surface tension of the ink at 25°C be equal to or less than 40 dyne/cm, more preferably equal to or less than 38 dyne/cm. When the surface tension falls within the range described above, the ink is excellent in ejection stability. When the surface tension is less than 20 dyne/cm, the ink becomes excessively high in wettability, and is liable to be blurred. Meanwhile, when the surface tension is more than 40 dyne/cm, the ink is liable to be repelled on a surface of the base material, and the obtained printed matter is liable to be unclear. In the present embodiment, the surface tension can be measured through use of a static surface tension meter (plate method) (CBVP-A3, manufactured by Kyowa Interface Science, Inc).

A method of adjusting the surface tension within the range described above is not particularly limited. For example, the surface tension may be adjusted by adding an acryl-based, silicone -based, or fluorine-based surface conditioner.

A method of preparing the ink constituting the ink set according to the present embodiment is not particularly limited. For example, the ink may be prepared by mixing materials to be used, dispersing the mixture through use of a dispersion machine such as a roll mill, a ball mill, a colloid mill, a jet mill, or a bead mill, and thereafter filtering the dispersed mixture.

As described above, the ink set according to the present embodiment includes, as a yellow colorant, at least any one selected from the group consisting of C.I. Pigment Brown 24, metal-coated C.I. Pigment Yellow 42, and C.I. Pigment Yellows 48, 53, 119, 161, and 189. Such yellow colorant is excellent in heat resistance, and hence is less liable to be changed in color even in a case of forming an image by the ink-jet method and thereafter drying at a high temperature. Therefore, a desired color is more likely to be reproduced on the obtained printed matter. Moreover, the printed matter formed through use of such ink set is excellent in weather resistance.

### <Method for producing Printed Matter>

A method for producing a printed matter according to one embodiment of the present invention mainly includes: a printing step of applying the ink set described above to a base material by an ink-jet method; and a drying step of drying the base material. As a result of drying, a printed matter having an image formed thereon is produced.

A method of applying the ink constituting the ink set to the base material by the ink-jet recording method is not particularly limited. Examples of such method include: continuous methods such as a charge modulation method, a micro-dot method, a charge jet control method, and an ink mist method; and on-demand methods such as a piezoelectric method, a pulse jet method, a bubble jet (registered trademark) method, and an electrostatic suction method.

In the method for producing a printed matter according to the present embodiment, the ink set including the pigment that includes the specified yellow colorant described above is used. Such yellow colorant is excellent in heat resistance, and is less liable to be changed in color even when the ink is exposed to a high temperature in the drying step.

The base material to which the ink is applied is not particularly limited. Examples of the base material include: metal plates such as a steel plate and a metal plate made of aluminum or stainless steel; plastic plates or films made of acryl, polycarbonate, ABS, polypropylene, polyester, or vinyl chloride; a ceramic plate; concrete; lumber; and glass. It is preferred that the base material be treated with a pretreatment agent before printing. Examples of the pretreatment agent include a fluorine-based coating material, a silicone-based coating material, an acrylic silicone-based coating material, an acryl-based coating material, an epoxy-based coating material, and an urethane-based coating material. Examples of a method of applying those pretreatment agent to the base material include a spray method, a roll coater method, a curtain flow coater method, a brush coating method, a paddle coasting method, a dipping method, and an ink-jet method. Moreover, the base material may be fabric formed of fibers, and examples of the fibers include: polyester-based fibers such as cation dyeable polyester (CDP) fibers, polyethylene terephthalate (PET) fibers, polybutylene terephthalate (PBT) fibers, polytrimethylene terephthalate (PTT) fibers, aromatic polyester fibers, and polylactic acid fibers; acetate fibers; triacetate fibers; polyurethane fibers; nylon fibers; and complex fibers thereof. Those fibers may be suitably selected in accordance with usage. When the base material is fabric, it is preferred that the fabric be treated with a pretreatment agent before printing. Examples of the pretreatment agent include a water-soluble polymer, non-water-soluble inactive organic compounds, a flame retardant, an ultraviolet absorber, a reduction inhibitor, an antioxidant, a pH conditioner, a hydrotrope agent, an antifoamer, a penetrant, and a micro-porous former. Examples of a method of applying those pretreatment agents to the fabric include a pad method, a spray method, a dipping method, a coating method, a lamination method, a gravure method, and an ink-jet method.

The base material to which the ink has been applied is then dried. Drying conditions are not particularly limited. For example, it is preferred that a drying temperature be equal to or more than 150°C, more preferably equal to or more than 180°C, still more preferably equal to or more than 200°C. Moreover, it is preferred that the drying temperature be equal to or less than 400°C, more preferably equal to or less than 350°C, still more preferably equal to or less than 300°C. It is preferred that a drying time period be equal to or more than 1 minute, more preferably equal to or more than 2 minutes, still more preferably equal to or more than 3 minutes. Moreover, it is preferred that the drying time period be equal to or less than 60 minutes, more preferably equal to or less than 30 minutes, still more preferably equal to or less than 10 minutes. With such drying, the pigment in the ink is less liable to be changed in color, and the solvent may be removed from the ink. In order to prevent the ink from being blurred, it is preferred that the drying be performed simultaneously or immediately after application of the ink to the base material.

The obtained printed matter is a printed matter, including: a base material; and a print layer formed on the base material. The print layer includes a pigment, a binder resin, and a dispersant. The pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189. The above-mentioned ink set including the yellow colorant is used for such printed matter. Therefore, the printed matter is excellent in heat resistance. Moreover, the obtained printed matter is excellent in weather resistance, and hence is capable of maintaining a desired color for a long period of time. Further, in the method for producing a printed matter according to the present embodiment, the yellow colorant being high in heat resistance is used, and hence a solvent having a high boiling point may be used as the solvent. As a result, drying of the nozzle of the ink-jet device is prevented, thereby being excellent in ejection stability at the time of ink-jet printing.

In the above, description is made of one embodiment of the present invention. The present invention is not particularly limited to the embodiment described above. The embodiment described above mainly describes the invention having the following configuration.
(1) An ink-jet ink set, comprising: a pigment; a binder resin; a dispersant; and a solvent, wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.
   According to such configuration, the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189. Such yellow colorant is excellent in heat resistance, and is less liable to be changed in color even in a case of forming an image by the ink-jet method and thereafter drying at a high temperature. Therefore, a desired color is more likely to be reproduced on the obtained printed matter. Moreover, the printed matter formed through use of such ink set is excellent in weather resistance.
(2) The ink-jet ink set according to (1), wherein the yellow colorant has an average particle diameter of from 110 nm to 400 nm.
   According to such configuration, the yellow colorant is more excellent in heat resistance.
(3) The ink-jet ink set according to (1) or (2), wherein the pigment includes, as a red colorant, at least any one selected from the group consisting of C.I. Pigment Reds 101 and 232, wherein the pigment includes, as a blue colorant, at least any one selected from the group consisting of C.I. Pigment Blues 28 and 36, and wherein the pigment includes, as a black colorant, at least any one selected from the group consisting of C.I. Pigment Blacks 7, 26, 27, 28, and 29.
   According to such configuration, the ink set is excellent in heat resistance not only with regard to the yellow colorant but also with regard to the red colorant, the blue colorant, and the black colorant. Therefore, the obtained printed matter is less liable to be changed in color not only with regard to the yellow-based color but also with regard to other colors, and hence a desired color is more likely to be reproduced. Moreover, the printed matter formed through use of such ink set is more excellent in weather resistance.
(4) The ink-jet ink set according to any one of (1) to (3), wherein the dispersant has a base value of equal to or less than 50 mgKOH/g.
   According to such configuration, the dispersant is less liable to be changed in color dispersant even in a case of forming an image by the ink-jet method and thereafter drying at a high temperature. Therefore, a desired color is more likely to be reproduced on the obtained printed matter. Moreover, the printed matter formed through use of such ink set is more excellent in weather resistance.
(5) The ink-jet ink set according to any one of (1) to (4), wherein the binder resin comprises fluororesin.
   According to such configuration, the ink-jet ink set is more excellent in heat resistance. Therefore, a desired color is more likely to be reproduced on the obtained printed matter. Moreover, the printed matter formed through use of such ink set is more excellent in weather resistance.
(6) A method for producing a printed matter, comprising: a printing step of applying the ink-jet ink set of any one of (1) to (5) to a base material by an ink-jet method; and a drying step of drying the base material.
   According to such configuration, the pigment of the ink-jet ink set includes, as a yellow colorant, any one selected from the group consisting of C.I. Pigment Brown 24, metal-coated C.I. Pigment Yellow 42, and C.I. Pigment Yellows 48, 53, 119, 161, and 189. Such yellow colorant is excellent in heat resistance, and is less liable to be changed in color in the drying step. Therefore, a printed matter on which a desired color is reproduced can be obtained. Moreover, the printed matter manufactured through use of such ink set is excellent in weather resistance.
(7) A printed matter, comprising: a base material; and a print layer formed on the base material, wherein the print layer includes a pigment, a binder resin, and a dispersant, and wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.

According to such configuration, the print layer of the printed matter includes the pigment including, as a yellow colorant, any one selected from the group consisting of C.I. Pigment Brown 24, metal-coated C.I. Pigment Yellow 42, and C.I. Pigment Yellows 48, 53, 119, 161, and 189. Such yellow colorant is excellent in heat resistance, and is less liable to be changed in color by the drying at the time of forming the printed matter. Therefore, a desired color is reproduced on the printed matter. Moreover, such printed matter is excellent in weather resistance.

### EXAMPLE

The present invention is specifically described with examples. The present invention is not limited to those examples at all.

Raw materials which were used are described below.

### (Pigment)

Yellow colorant 1: C.I. Pigment Brown 24 (NF-5480, manufactured by NIKKEN Co., Ltd)
Yellow colorant 2: C.I. Pigment Yellow 48 (42-557A, manufactured by Tokan Material Technology Co., Ltd.)
Yellow colorant 3: C.I. Pigment Yellow 53 (NF-5850, manufactured by NIKKEN Co., Ltd)
Yellow colorant 4: C.I. Pigment Yellow 119 (NF-6800, manufactured by NIKKEN Co., Ltd)
Yellow colorant 5: C.I. Pigment Yellow 161 (42-542A, manufactured by Tokan Material Technology Co., Ltd.)
Yellow colorant 6: C.I. Pigment Yellow 189 (42-540A, manufactured by Tokan Material Technology Co., Ltd.)
Yellow colorant 7: C.I. Pigment Yellow 42 coated with alumina (TSY-1H, manufactured by TODAKOGYO CORP)
Yellow colorant 8: C.I. Pigment Yellow 42 (TSY-1, manufactured by TODAKOGYO CORP)
Yellow colorant 9: C.I. Pigment Yellow 184 (Sicopal L1100, manufactured by BASF Japan)
Red colorant 1: C.I. Pigment Red 101 (160ED, manufactured by TODAKOGYO CORP)
Red colorant 2: C.I. Pigment Red 232 (GC-25, manufactured by NIKKEN Co., Ltd)
Blue colorant 1: C.I. Pigment Blue 28 (NF-2800, manufactured by NIKKEN Co., Ltd)
Blue colorant 2: C.I. Pigment Blue 36(NF-2500, manufactured by NIKKEN Co., Ltd)
Black colorant 1: C.I. Pigment Black 7 (NIPEX35, manufactured by Evonik Japan)
Black colorant 2: C.I. Pigment Black 26(NF-100, manufactured by NIKKEN Co., Ltd)
Black colorant 3: C.I. Pigment Black 27(NF-710, manufactured by NIKKEN Co., Ltd)
Black colorant 4: C.I. Pigment Black 28 (NF-800, manufactured by NIKKEN Co., Ltd)
Black colorant 5: C.I. Pigment Black 29(NF-100, manufactured by NIKKEN Co., Ltd)

### (Binder Resin)

Fluororesin: LF-200F: trifluoride ethylene/vinyl monomer alternating copolymer, manufactured by AGC Inc., Mw: 20,000
Acrylic resin: BR-105: manufactured by MITSUBISHI RAYON CO., LTD., Mw: 50,000

### (Dispersant)

Solsperse 33000: polymeric dispersant, base value 41.6 mgKOH/g, manufactured by Lubrizol Japan Limited
Solsperse 36000: polymeric dispersant, base value 0 mgKOH/g, manufactured by Lubrizol Japan Limited

### (Solvent)

MTEM: tetraethylene glycol dimethyl ether, glycol ether-based solvent, boiling point: 275°C, manufactured by TOHO Chemical Industry Co., Ltd.
DEDG: diethylene glycol diethylether, glycol ether-based solvent, boiling point: 189°C, Nippon Nyukazai Co., Ltd.

### <Preparation of Dispersion>

A method of preparing dispersion is described below.

### (Yellow Ink Y1)

The yellow colorant 1 of 10 parts by mass, the binder resin (LF-200F) of 12 parts by mass, the dispersant (Solsperse 33000) of 2 parts by mass, the solvent (MTEM) of 12 parts by mass, and the solvent (DEDG) of 64 parts by mass were mixed with a mixer and then filtered to thereby prepare the yellow ink Y1. An average particle diameter of the pigment (yellow colorant) dispersed in the obtained ink was 240 nm.

### (Yellow Inks Y2 to Y12, Magenta Inks R1 to R2, Cyan Inks B1 to B3, and Black Inks Bk1 to Bk5)

The components and the blending quantities were changed to those described in Table 1, and the mixing conditions were suitably changed, to thereby adjust the average particle diameter. Other than those operations, the yellow inks Y2 to Y12, the magenta inks R1 to R2, the cyan inks B1 to B3, and the black inks Bk1 to Bk5 were prepared, in a manner similar to the yellow ink Y1.

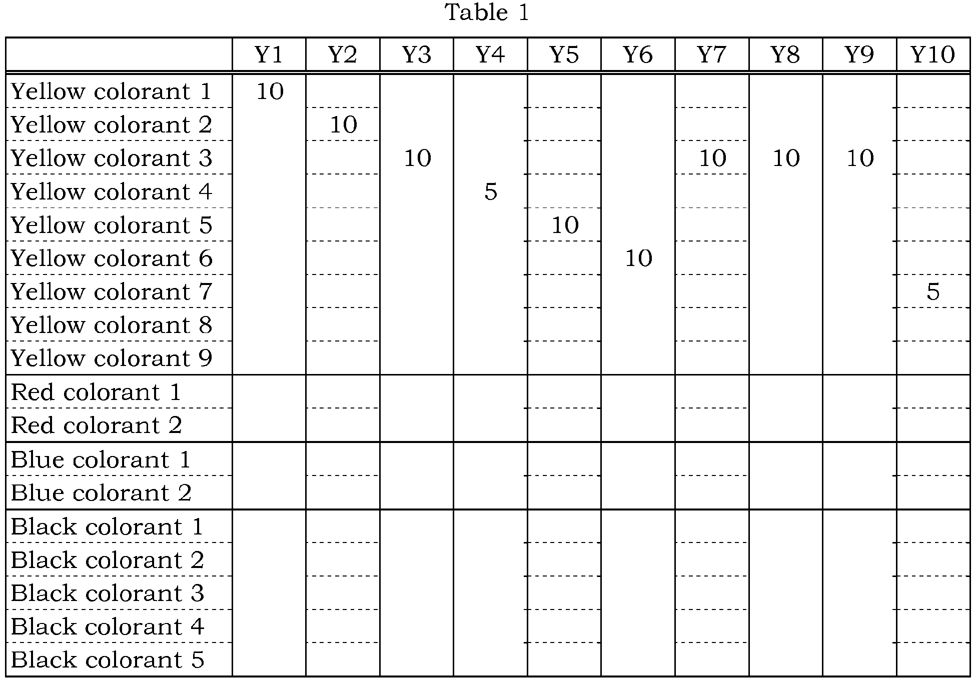

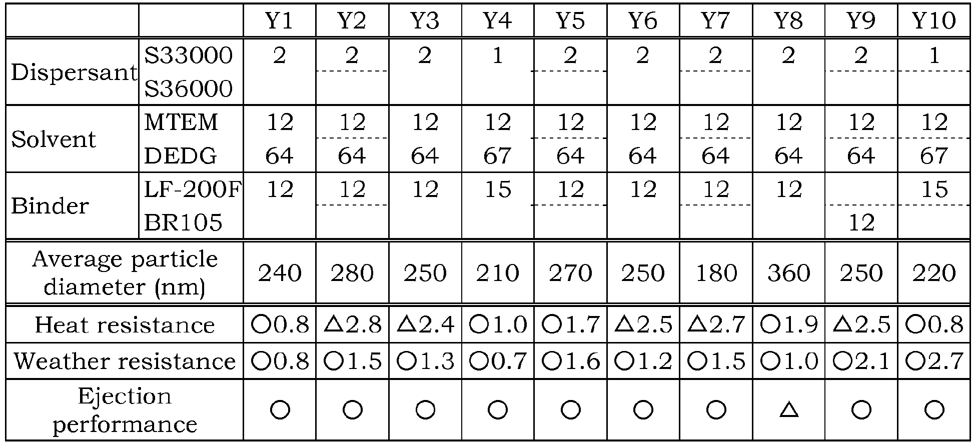

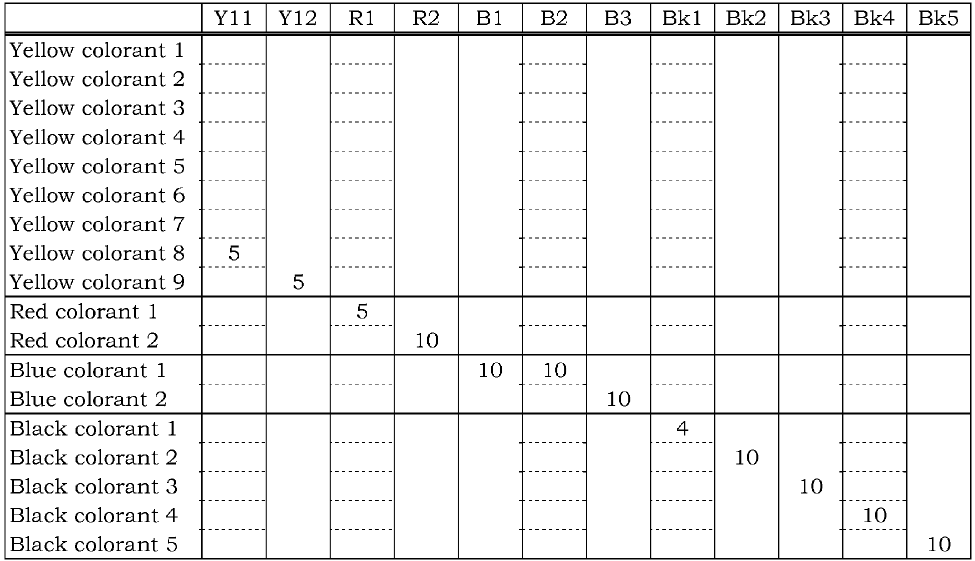

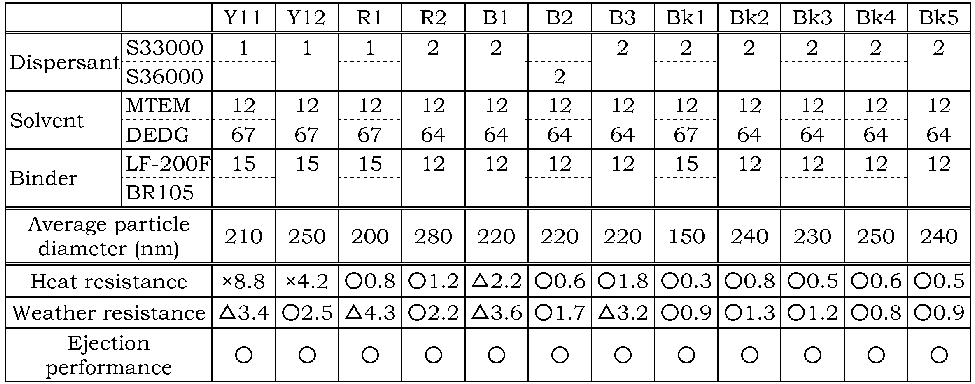

Methods of measuring physical property values are described below.

### (Average Particle Diameter)

The produced ink was diluted to 10,000 times with cyclohexanone, and an average particle diameter was measured by a dynamic light scattering method through use of Zetasizer Nano S manufactured by Malvern Instruments.

### (Base Value)

The base value is represented by milligrams (mg) of the amount of potassium hydroxide corresponding to the amount of hydrochloric acid required for neutralizing basic components contained in 1 g of the dispersant, and was measured by potentiometric titration defined in JIS K 2501.

### (Mw, Mn)

The Mw and Mn were values measured by GPC (gel permeation chromatography), and were measured through use of a high-speed GPC device (HLC-8120GPC, manufactured by TOSOH CORPORATION) in this example.

### (Examples 1 to 17, Comparative Examples 1 to 2)

In accordance with the combinations of the inks shown in Table 2 given below, ink sets were produced. Through use of the obtained ink sets, under the following ink-jet conditions, ink-jet printing was performed on a base material (which was obtained by applying fluorine coating material (BONNFLON (registered trademark) #1000SR upper coating, AGC Coat-Tech Co., Ltd.) to an aluminum steel plate, which has been subjected to chromate treatment, with an air spray so as be 150g/m² (wet application amount) and thereafter drying for 3 minutes under 200°C environment). Drying treatment was performed on an obtained ink-jet image under the following drying conditions. As a result, the printed matter was produced.

**Table 2**

| | Ink set | | | | Heat resistance | Weather resistance | Ejection stability |
|---|---|---|---|---|---|---|---|
| Example 1 | Y1 | R1 | B1 | Bk1 | ○1.0 | ○2.4 | ○ |
| Example 2 | Y2 | R1 | B1 | Bk1 | ○1.5 | ○2.6 | ○ |
| Example 3 | Y3 | R1 | B1 | Bk1 | ○1.4 | ○2.5 | ○ |
| Example 4 | Y4 | R1 | B1 | Bk1 | ○1.4 | ○2.4 | ○ |
| Example 5 | Y5 | R1 | B1 | Bk1 | ○1.3 | ○2.6 | ○ |
| Example 6 | Y6 | R1 | B1 | Bk1 | ○1.5 | ○2.5 | ○ |
| Example 7 | Y7 | R1 | B1 | Bk1 | ○1.5 | ○2.6 | ○ |
| Example 8 | Y8 | R1 | B1 | Bk1 | ○1.3 | ○2.5 | Δ |
| Example 9 | Y9 | R1 | B1 | Bk1 | ○1.5 | ○2.7 | ○ |
| Example 10 | Y10 | R1 | B1 | Bk1 | ○1.0 | ○2.9 | ○ |
| Comparative Example 1 | Y11 | R1 | B1 | Bk1 | ×3.0 | Δ3.1 | ○ |
| Comparative Example 2 | Y12 | R1 | B1 | Bk1 | ○1.9 | ○2.8 | ○ |
| Example 11 | Y1 | R2 | B1 | Bk1 | ○1.1 | ○1.9 | ○ |
| Example 12 | Y1 | R1 | B2 | Bk1 | ○0.6 | ○1.9 | ○ |
| Example 13 | Y1 | R1 | B3 | Bk1 | ○0.9 | ○2.3 | ○ |
| Example 14 | Y1 | R1 | B1 | Bk2 | ○1.2 | ○2.5 | ○ |
| Example 15 | Y1 | R1 | B1 | Bk3 | ○1.1 | ○2.5 | ○ |
| Example 16 | Y1 | R1 | B1 | Bk4 | ○1.1 | ○2.4 | ○ |
| Example 17 | Y1 | R1 | B1 | Bk5 | ○1.1 | ○2.4 | ○ |

### <Ink-jet Condition>

Ink-jet recording device: piezoelectric method
Nozzle diameter: 40 µm
Ink droplet size: 30 pl
Drive voltage: 70 V
Frequency: 12 kHz
Resolution: 400×800 dpi
Base material temperature: 60°C (heated)
Print pattern: solid single color pattern

### <Drying Condition>

Drying by heating (3 minutes under 240°C environment)

With regard to ink sets and printed matters obtained in Examples 1 to 17 and Comparative Examples 1 to 2, evaluation was made based on the following evaluation method and evaluation criterion. Results are shown in Table 2. Also with regard to the inks used in the examples, evaluation was made on physical properties of inks and printed matters based on the following evaluation method and evaluation criterion. Results are shown in Table 1.

### <Heat Resistance>

For the printed matter, a color difference was measured after heating for 3 minutes under the 240°C environment. (Color Difference Measurement Method)

A color difference ΔE was defined as a color difference given between before and after a super-accelerated weather resistance test for a printed matter, which was conducted in a light resistance test described later. The color difference was measured through use of aspectrophotometer (CM-3700, manufactured by Konica Minolta, Inc.).

### (Evaluation Criterion)

○: Color difference was ΔE≤2.
Δ: Color difference was 2<ΔE≤3.
×: Color difference was ΔE>3.

### <Weather Resistance>

For a printed matter, through use of a super UV tester (SUV-W161, manufactured by IWASAKI ELECTRIC CO., LTD.), ultraviolet irradiation was performed for 6 hours (UV condition 100 mW/cm², temperature 63°C, and humidity 50%) as a super-accelerated weather resistance test, and then showering is performed for 30 seconds. After that, by the course of nature, dew condensation for 2 hours as one cycle was conducted for 600 hours in total. Then, the color difference was measured.

### (Color Difference Measurement Method)

A color difference ΔE was defined as a color difference given between before and after a super-accelerated weather resistance test for a printed matter. The color difference was measured through use of aspectrophotometer (CM-3700, manufactured by Konica Minolta, Inc.).

### (Evaluation Criterion)

○: Color difference was ΔE≤3.
Δ: Color difference was 3<ΔE≤5.
×: Color difference was ΔE>5.

### <Ejection Stability>

Clogging of the nozzle given after continuous ejection for 60 minutes and given after stationary placement after ejection were checked.

### (Evaluation Criterion)

○: Clogging of the nozzle did not occur.
Δ: Clogging of the nozzle did not occur at the time of continuous ejection or after 10 minutes of stationary placement.
×: Clogging of the nozzle occurred at the time of continuous ejection or after 10 minutes of stationary placement.

As shown in Table 2, the ink set of Examples 1 to 17 in which the yellow colorant including any one of C.I. Pigment Brown 24, metal-coated C.I. Pigment Yellow 42, and C.I. Pigment Yellows 48, 53, 119, 161, and 189 was excellent in ejection stability. Moreover, printed matters obtained through use of those ink sets ware excellent in heat resistance and weather resistance.

Meanwhile, the ink set of Comparative Example 1 using a yellow colorant other than those described above was inferior in heat resistance and weather resistance. Moreover, the yellow ink Y12 was inferior in heat resistance (see Table 1). Therefore, the ink set of Comparative Example 2 including such yellow ink Y12 was not so excellent in heat resistance even though other colorants were excellent in heat resistance.

## Claims

1. An ink-jet ink set, comprising:
a pigment;
a binder resin;
a dispersant; and
a solvent,
wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.

2. The ink-jet ink set according to claim 1, wherein the yellow colorant has an average particle diameter of from 110 nm to 400 nm.

3. The ink-jet ink set according to claim 1 or 2,
wherein the pigment includes, as a red colorant, at least any one selected from the group consisting of C.I. Pigment Reds 101 and 232,
wherein the pigment includes, as a blue colorant, at least any one selected from the group consisting of C.I. Pigment Blues 28 and 36, and
wherein the pigment includes, as a black colorant, at least any one selected from the group consisting of C.I. Pigment Blacks 7, 26, 27, 28, and 29.

4. The ink-jet ink set according to any one of claims 1 to 3, wherein the dispersant has a base value of equal to or less than 50 mgKOH/g.

5. The ink-jet ink set according to any one of claims 1 to 4, wherein the binder resin comprises fluororesin.

6. A method for producing a printed matter, comprising:
a printing step of applying the ink-jet ink set of any one of claims 1 to 5 to a base material by an ink-jet method; and
a drying step of drying the base material.

7. A printed matter, comprising:
a base material; and
a print layer formed on the base material,
wherein the print layer includes a pigment, a binder resin, and a dispersant, and
wherein the pigment includes, as a yellow colorant, at least any one selected from the group consisting of C.I. Pigment Brown 24, metal-coated C.I. Pigment Yellow 42, and C.I. Pigment Yellows 48, 53, 119, 161, and 189.
